# EUROPEAN PATENT APPLICATION

(11) **EP 3 489 582 A1**
(43) Veröffentlichungstag der Anmeldung: **29.05.2019**
(21) Anmeldenummer: 17834839.7
(22) Anmeldetag: 14.06.2017
(51) Int. Cl.: F23B 40/00, F23N 5/00, F24H 1/00, F28F 3/02

(54) **HEIZKESSEL**

(30) Priorität: 25.07.2016 MD S20160091
(71) Anmelder: Manastirli, Victor, 6104 Ceadir-Lunga-UTA Gagauzia (MD)
(72) Erfinder: Manastirli, Victor, 6104 Ceadir-Lunga-UTA Gagauzia (MD)
(74) Vertreter: Jeck, Anton
(86) Internationale Anmeldenummer: PCT/MD2017/000004
(87) Internationale Veröffentlichungsnummer: WO 2018/021902

(57) **Zusammenfassung**

Die Erfindung betrifft einen automatischen Heizkessel mit einem doppelwandigen Gehäuse, das einen Wassermantel bildet, einem Wärmetauscher, einem Feuerraum, einem Gitterrost, einem Aschefallraum, einem Bunker und einer Speiseschnecke. Der Wärmetauscher ist im unteren Teil kammförmig ausgeführt und weist zwei bzw. mehr Schichten auf. Über dem Gitterrost ist eine Vorrichtung zur Aschelockerung mit einem Elektromotor angeordnet. Der Heizkessel enthält zusätzlich eine Kühlfläche, eine Absperrklappe, eine Sichtungsvorrichtung, eine Feuerlöscheinrichtung und eine Steuereinheit mit einer Anzeigefläche, die elektrische Kupplungen mit Überwachungs-sensoren sowie mit Anzeige- und Signaleinrichtungen aufweisen.

## Beschreibung

Die Erfindung bezieht sich auf das Gebiet der Wärmeenergiewirtschaft, und zwar auf Vorrichtungen zur Kraftstoff-, bevorzugt Biokraftstoff-Verbrennung, und kann in Systemen von unterbrechungsfreien Warmwasserheizungen in Wohn- und Betriebsräumen benutzt werden.

Bekannt ist ein Heizkessel, der folgende Komponenten umfasst: einen Festbrennstoff-Bunker und eine senkrecht zum Festbrennstoff-Bunker angeordnete Brennstoff-Förderanlage, eine Brennervorrichtung, eine Luftzufuhrvorrichtung, einen wärmeisolierten wassergekühlten Feuerraum, der aus einer Verbrennungskammer und einer Ausbrennkammer besteht, einen Wärmetauscher, einen Vorwärmer (Economiser), einen Aschenfänger, eine Aschenkammer sowie einen Automatikblock und einen Elektroantrieb. Der Wärmetauscher mit Stutzen zur Zuleitung und Ableitung eines flüssigen Wärmeträgers ist aus einem Wärmetauscher-Gehäuse und einem Ausbrennkammer-Gehäuse des Bunkers und des Schneckenförderers für die Brennstoffförderung in den Feuerraum des Heizkessels gebildet [1].

Der Hauptmangel des automatischen (automatisierten) Kohlekessels besteht darin, dass seine Brennstoff-Förderanlage in Form eines Schneckenförderers ausgebildet ist. Bei solchen Schneckenförderern kommt es ziemlich oft zum Verkeilen der Förderschnecke, wenn große Brennstoffstücke in den Bereich des Aneinanderfügens der Förderschnecke und des Feuerraums bzw. der Förderschnecke und des Bunkers geraten. Als Mängel der Schneckenförderer können außerdem das Überhitzen der sich in der Brennzone befindenden Förderschnecke und folglich die Notwendigkeit der Abkühlung dieser Förderschnecke angesehen werden. Bei der Verwendung eines solchen Schneckenförderers ist die Luftzuführung in die Brennzone erschwert, wodurch zusätzliche Vorrichtungen in Form von speziellen Druckbelüftern nötig sind. Dadurch wird die Möglichkeit ausgeschlossen, den Heizkessel energieautark zu betreiben. Darüber hinaus ist im Prototyp die Anordnung der Förderschnecke in der Brennzone vorgesehen. In diesem Fall verliert das Metall unter Einwirkung von hohen Temperaturen seine mechanischen Eigenschaften und fängt an, sich zu verformen. Dies bedeutet, dass in die Konstruktion des Prototyps Vorrichtungen zum Abkühlen der Förderschnecke zusätzlich eingeführt werden müssen. Dadurch wird die Konstruktion zusätzlich verkompliziert. Da die Förderschnecke in der Brennzone angeordnet und der Einwirkung von hohen Temperaturen ausgesetzt ist, wird ferner der Einsatz von leichtentzündlichen Brennstoffen unmöglich, denn diese können im Bunker entflammen.

Bekannt ist ein mit festem Biokraftstoff zu betreibender Heizkessel, der ein Gehäuse mit einem Bunker für die Brennstoffbeschickung umfasst. Dem Bunker wird Frischluft zugeführt. Unter dem Bunker befindet sich ein Aschenfallraum, der vom Bunker durch einen Zwischenboden getrennt ist. Im Zwischenboden befindet sich ein Bereich, in dem die Verbrennung und der Austritt von flüchtigen Verbrennungsgasen erfolgen. Dieser Bereich ist in Form eines vertikalen Kanals mit einem absteigenden Gasstrom mit der Zuleitung von Nebenluft ausgeführt. Dieser Gasstrom strömt zum Aschenfallraum. Von der unteren Stirnfläche des vertikalen Kanals mit einem absteigenden Gasstrom zweigt senkrecht in Bezug auf die Achse eines vertikalen Kanals ein Ausbrennkanal ab, der in den Aschenfallraum führt. Der Ausbrennkanal ist gebogen und in Richtung des Hauptstroms ausgebildet. Die bevorzugte Ausführung weist die Form eines Kreisbogens bzw. einer Spirale [2] auf.

Der Hauptmangel besteht darin, dass der Heizkessel mit keiner Brennstoff-Förderanlage versehen ist. Dies verursacht nicht nur einen erhöhten Aufwand, sondern auch eine verlängerte Wasseraufwärmzeit, denn der Brennstoff muss je nach Bedarf in den Feuerraum von Hand eingelegt werden.

Bekannt ist auch ein Biokraftstoff-Heizkessel, bestehend aus einem Gehäuse, einem Wassermantel, einem Feuerraum, einem Wärmetauscher und einer Vorrichtung zur Beschickung des Heizkessels mit Brennstoff. Der Heizkessel enthält einen Brennstoff-Bunker und einen Schneckenförderer, der zur Förderung von Brennstoff in den Feuerraum des Heizkessels dient [3].

Der Hauptnachteil dieses Heizkessels besteht darin, dass das Vorhandensein eines Schneckenförderers im Hohlraum der Feuerung beim Betrieb bei hohen Temperaturen ein Verkeilungsrisiko herbeiführt. Dies kann Betriebsstörungen verursachen und den Betrieb des Heizkessels sowie den Brennprozess beeinträchtigen.

Die mit der vorgeschlagenen Erfindung zu lösende technische Aufgabe besteht darin, die angegebenen Mängel zu beseitigen und einen mit Festbrennstoff bzw. Biokraftstoff zu betreibenden Heizkessel zu schaffen, der für eine bestimmte Brennstoffart leicht einstellbar ist, sowie eine erhöhte Sicherheit, eine automatisierte Betriebsweise, einen hohen Wirkungsgrad und eine hohe Brandsicherheit aufweist.

Die gestellte Aufgabe wird unter Anwendung leicht abnehmbarer Kühlflächen gelöst. Diese Kühlflächen sorgen für einen schnellen Übergang auf die vorgewählte Brennstoffart. Die gestellte Aufgabe wird auch anhand von folgenden Merkmalen gelöst: das Vorhandensein einer Vorrichtung zur Aschelockerung, die eine vollständige Verbrennung des zum Einsatz kommenden Brennstoffs fördert, die Verwendung von mehrschichtigen Wärmetauschern, eine Sonderausführung zur Erreichung des höchsten Wirkungsgrads und das Vorhandensein einer Steuereinheit, die zur Überwachung von optimalen Arten der Flammenführung dient, die für die Aufrechterhaltung einer unterbrechungsfreien Brennstoffverbrennung und die Brandsicherheit beim Betrieb des Heizkessels sorgt.

Damit wird folgendes technisches Ergebnis der vorgeschlagenen Erfindung erreicht:
- die Erhöhung der Funktionssicherheit und des Wirkungsgrads des Heizkessels;
- die Gewährleistung einer automatisierten Überwachung, einer Steuerung optimaler Arten der Flammenführung bei der Verbrennung von verschiedenen Brennstoffen und einer Aufrechterhaltung eines unterbrechungsfreien Betriebs;
- die Gewährleistung der Brandsicherheit beim Betrieb des Heizkessels.

Der erfindungsgemäße automatische (automatisierte) Heizkessel wird anhand eines in den Zeichnungen dargestellten Ausführungsbeispiels näher erläutert. Es zeigen:

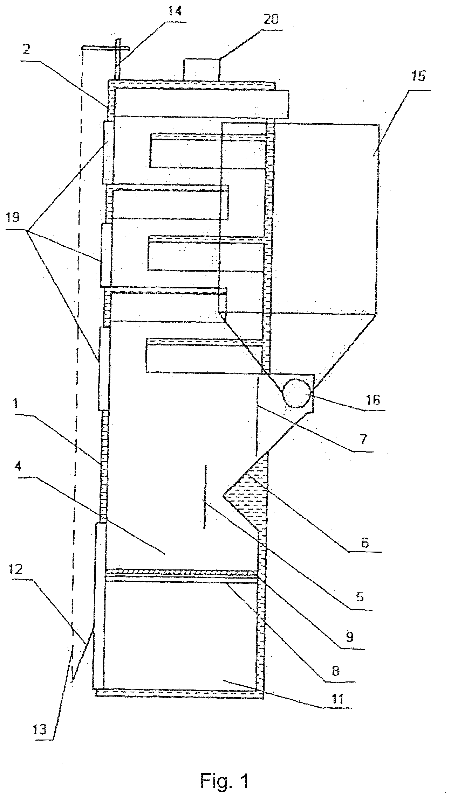

- Fig. 1: eine Gesamtansicht eines automatischen Heizkessels und

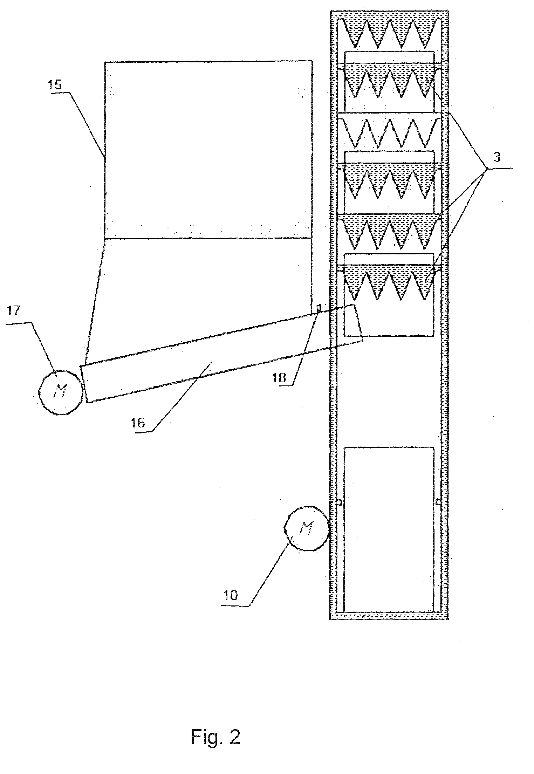

- Fig. 2: eine Seitenansicht des automatischen Heizkessels der Fig.1.

Der automatische Heizkessel gemäß der vorgeschlagenen technischen Lösung umfasst ein doppelwandiges Gehäuse 1, das einen Wassermantel 2 bildet, einen kammförmigen Wärmetauscher 3, der zwei- bzw. mehrschichtig ausgeführt ist, einen Feuerraum 4 mit einer Kühlfläche 5, eine Sichtungsvorrichtung 6 und eine Absperrklappe 7, einen Gitterrost 8, eine Vorrichtung 9 zur Aschelockerung mit einem Elektromotor 10, einen Aschenfallraum 11, eine Aschenfalltür 12, die mittels einer Kette 13 mit einem Hebel eines Temperaturreglers 14 verbunden ist, sowie einen Bunker 15, eine Speiseschnecke 16 mit einem Elektromotor 17, eine Feuerlöscheinrichtung, die aus einer Düse 18 mit einem Wasserbehälter und einer Pumpe besteht (nicht gezeigt), Sichttüren 19 und eine elektronische Steuereinheit 20 mit einer Anzeigefläche. Die elektronische Steuereinheit hat elektrische Kupplungen mit Anzeige- und Signaleinrichtungen sowie Sensoren für die Überwachung der Flammenführung bei der Kraftstoffverbrennung, des Luftzugs und der Überlastung der Elektromotoren und der Wassertemperatur im Heizkessel.

Der automatische Heizkessel funktioniert wie folgt:
Vor der Inbetriebnahme, falls Biokraftstoff in Form von Pellets, Granulen oder Feingut verwendet wird, wird der Bunker 15 mit dem gewählten Brennstoff beschickt. Der Feuerlöschbehälter (nicht gezeigt) wird mit Wasser gefüllt. Eine Absperrklappe 7 wird aus dem Feuerraum 4 entfernt. Die Betriebstemperatur des Heizkessels wird je nach der erforderlichen Wassertemperatur eingestellt. Danach wird der in den Feuerraum 4 eingebrachte Teil des Brennstoffs mittels einer Fackel angezündet. Der Heizkessel beginnt, in der gewählten Betriebsart zu funktionieren. Eine Speiseschnecke 16 wird von einem Elektromotor 17 gedreht, der in regelmäßigen Abständen, je nach der gewählten Betriebsart, Brennstoff in den Feuerraum 4 fördert. Der Brennstoff rutscht die geneigte Fläche der Sichtungsvorrichtung 6 hinab und entflammt, wenn er auf den Gitterrost 8 gerät. Die Sichtungsvorrichtung 6 verteilt den von der Speiseschnecke 16 in den Feuerraum 4 zugeführten Biokraftstoff gleichmäßig auf der Oberfläche des Gitterrosts 8 und dient auch zur Ablenkung der Flamme in Richtung der Kühlfläche 5.

Dadurch wird das Vordringen der Flamme in die Speiseschnecke 16 ausgeschlossen. Da im Zuge der Verbrennung Ascheklumpen gebildet werden, die den Zutritt der die normale Flammenführung sicherstellenden Luft sperren, setzt ein Elektromotor 10 die Vorrichtung 9 zur Aschelockerung in Bewegung, die über dem Gitterrost 8 angeordnet ist. Infolgedessen werden die Ascheklumpen aufgelockert und der Zutritt einer erforderlichen Luftmenge in den Feuerraum 4 sichergestellt. Dabei wird der Brennprozess verbessert, und die Feinpartikel der Asche gelangen in einen Aschefallraum 11. Infolge der Biokraftstoffverbrennung im Feuerraum 4 strömen die Verbrennungsgase zum Auslauf des Rauchgaskanals des Heizkessels. Dabei durchströmen sie das von den mehrschichtigen Wärmetauschern 3 gebildete Labyrinth, dessen Schichten jeweils im unteren Teil kammförmig ausgeführt sind. Eine solche Ausführungsform der Wärmetauscher 3 sorgt für die Ausbildung einer größtmöglichen Wärmetauschfläche bei geringen Abmessungen des Heizkessels. Die Konstruktion der Wärmetauscher 3, die kammförmig und mehrschichtig ausgeführt sind, ermöglicht es auch, dünne Wärmeträgerschichten zu bilden, was zu einer beschleunigten Wärmeabgabe heißer Ströme der Verbrennungsgase an den Wärmeträger sowie einer beschleunigten Wärmeträger-Zirkulation innerhalb des Heizkessels beiträgt. Dies wirkt sich im Ergebnis dahingehend aus, dass der Wärmeträger generell schnell erwärmt wird. Die Hohlräume der Wärmetauscher 3 sind mit dem Hohlraum des Wassermantels 2 des Heizkesselgehäuses 1 verbunden. Dadurch wird die Betriebstemperatur des Heizkessels in kurzer Zeit erreicht. Eine elektronische Steuereinheit 20 überwacht die Flammenführung mittels Sensoren für die Überwachung der Flammenführung bei der Kraftstoffverbrennung, des Luftzugs und der Überlastung der Elektromotoren. Bei der Entstehung von Betriebsstörungen und Abweichungen von vorgegebenen Parametern unterbricht die elektronische Steuereinheit 20 den Betrieb des Heizkessels. Falls die Flamme im Feuerraum 4 des Heizkessels zu groß wird und über die Sichtungsvorrichtung 6 hinausgeht und der Brennstoff in der Speiseschnecke 16 entflammt, gibt die elektronische Steuereinheit 20 einen entsprechenden Befehl, um das Entzünden des im Bunker 15 sich befindenden Brennstoffs auszuschließen. Demzufolge spricht die Feuerlöscheinrichtung an. Dabei wird die Flamme in der Förderschnecke vom Wasser gelöscht, das aus dem Feuerlöschbehälter durch die Rohrleitung einer Düse 18 zugeleitet wird.

Für den Fall, dass der Festbrennstoff in Form von Holz bzw. Holzbriketts eingesetzt wird, wird der Heizkessel auf den Betrieb mit Festbrennstoff umgeschaltet. Hierfür wird aus dem Feuerraum 4 die Kühlfläche 5 entfernt, und die Absperrklappe 7 wird vor der Speiseschnecke 16 angebracht, um das Vordringen der Flamme aus dem Feuerraum 4 in den Bunker 15 auszuschließen. Danach wird der in den Feuerraum 4 eingebrachte Teil des Brennstoffs mittels einer Fackel angezündet. Die elektronische Steuereinheit 20 überwacht den Betriebszustand des Heizkessels anhand von Sensoren und steuert den Brennprozess im Feuerraum. So wird je nach der vom Temperaturregler 14 vorgegebenen Wassertemperatur und mittels einer Regelung der in den Aschefallraum 11 strömenden Luft die Aschefalltür 12 mit Hilfe einer mit dem Hebel des Temperaturreglers 14 verbundenen Kette 13 geöffnet bzw. geschlossen, wobei eine kontinuierliche Kraftstoffverbrennung aufrechterhalten wird.

Die elektronische Steuereinheit 20 sorgt für den automatischen Betrieb des Heizkessels. So wird beim Einsatz von zerkleinertem Biokraftstoff oder Pellets, mit denen der Feuerraum des Heizkessels mittels der Speiseschnecke 16 beschickt wird, eine entsprechende Art der Beschickung des Feuerraums 4 gewählt, die es ermöglicht, eine kontinuierliche Kraftstoffverbrennung im Feuerraum des Heizkessels sicherzustellen.

Bei Abweichungen von den vorgegebenen Betriebsarten des Heizkessels, bei fehlender Flamme im Feuerraum, fehlendem Luftzug, beim Aufsieden von Wasser, bei der Verklemmung der Elektromotoren sowie bei der Entstehung einer Brandgefährdung stellt die elektronische Steuereinheit 20 den Betrieb des Heizkessels ein, wovon eine spezielle Anzeige informiert. Auch in Notfällen, in denen eine Flamme entsteht oder in den Hohlraum der Speiseschnecke 16 vordringt, schaltet die elektronisehe Steuereinheit 20 die Feuerlöscheinrichtung an, um das Entzünden des Brennstoffs außerhalb des Feuerraums 4 auszuschließen. Das aus dem Feuerlöschbehälter durch die Rohrleitung der Düse 18 zugeleitete Wasser löscht die Flamme und unterbricht gleichzeitig den Betrieb des Heizkessels. Die elektronische Steuereinheit 20 ermöglicht die Wiedereinschaltung des Heizkessels erst nach der Behebung von Störungsursachen, Fehlfunktion bzw. Störfällen.

Sichttüren 19 ermöglichen den Zugang zum Kanal für die Entfernung der Verbrennungsgase während der Durchführung der Routine- und Wartungsarbeiten am Heizkessel zwecks der Reinigung von Oberflächen der Wärmetauscher 3 von Rußablagerungen.

## Patentansprüche

1. Automatischer Heizkessel mit einem doppelwandigen Gehäuse, das einen Wassermantel bildet, einem Wärmetauscher, einem Feuerraum, einem Gitterrost, einem Aschefallraum, einem Bunker und einer Speiseschnecke, **dadurch gekennzeichnet,**
**dass** der Wärmetauscher im unteren Teil kammförmig ausgeführt ist und zwei bzw. mehr Schichten aufweist,
**dass** über dem Gitterrost eine Vorrichtung zur Aschelockerung mit einem Elektromotor angeordnet ist und
**dass** der Heizkessel zusätzlich eine Kühlfläche, eine Absperrklappe, eine Sichtungsvorrichtung, eine Feuerlöscheinrichtung und eine Steuereinheit mit einer Anzeigefläche enthält, die elektrische Kupplungen mit Überwachungssensoren sowie mit Anzeige- und Signaleinrichtungen aufweisen.

2. Automatischer Heizkessel nach Anspruch 1,
**dadurch gekennzeichnet,**
**dass** über den Schichten des Wärmetauschers jeweils Sichttüren angeordnet sind.

3. Automatischer Heizkessel nach Anspruch 1,
**dadurch gekennzeichnet,**
**dass** die Feuerlöscheinrichtung aus einer Düse besteht, die mittels einer Rohrleitung mit einem Wasserbehälter und einer Pumpe verbunden ist.

4. Automatischer Heizkessel nach Anspruch 1,
**dadurch gekennzeichnet,**
**dass** er Sensoren zur Überwachung der Flammenführung, des Kraftzugs und der Überlastung der Elektromotoren und der Wassertemperatur im Heizkessel enthält.
